# FASCICULE DE BREVET EUROPEEN

(11) **EP 3 283 236 B1**
(45) Date de publication et mention de la délivrance du brevet: **16.09.2020**
(21) Numéro de dépôt: 16722057.3
(22) Date de dépôt: 12.04.2016
(51) Int. Cl.: B05D 1/18, G01N 21/80, G01N 31/22

(54) **PROCÉDÉ POUR GREFFER UN INDICATEUR COLORÉ SUR UN SUPPORT SOLIDE ET KIT DE MISE EN OEUVRE**
VERFAHREN ZUM PFROPFEN EINES FARBINDIKATOR AUF EIN FESTES SUBSTRAT UND KIT ZUR IMPLEMENTATION
METHOD FOR GRAFTING A COLOURED INDICATOR ONTO A SOLID SUBSTRATE AND IMPLEMENTATION KIT

(30) Priorité: 13.04.2015 FR 1553201
(43) Date de publication de la demande: 21.02.2018
(73) Titulaire: Commissariat à l'Énergie Atomique et aux Énergies Alternatives, 75015 Paris (FR)
(72) Inventeur: DOIZI, Denis, 75013 Paris (FR); DENIAU, Guy, 78690 Les Essarts-le-Roi (FR); FAGES, Mathias, 91300 Massy (FR)
(74) Mandataire: Brevalex
(86) Numéro de dépôt international: PCT/EP2016/058030
(87) Numéro de publication internationale: WO 2016/166108

(56) Documents cités:
- EP-A1- 1 271 143
- EP-A2- 0 477 501
- WO-A1-2015/171872
- WO-A2-2008/078052
- US-A- 5 000 901
- US-A- 5 119 463
- US-A- 5 127 077
- US-A- 5 379 147
- US-A1- 2008 145 949
- Mathias Fages ET AL: "Study and design of an optode for pH measurement", Biomedical photonics and optoelectronic imaging : 8 - 10 November 2000, Beijing, China, vol. 8774, 3 May 2013 (2013-05-03), page 87741F, XP055255940, Bellingham, Wash., US DOI: 10.1117/12.2020771 ISBN: 978-1-62841-832-3

## Description

### DOMAINE TECHNIQUE

L'invention appartient au domaine des indicateurs colorés et plus particulièrement au domaine des indicateurs colorés fixés sur des supports solides.

La présente invention propose un procédé permettant de greffer, de façon covalente, des indicateurs colorés notamment en vue de la mesure de paramètres chimiques et propose également un kit pour la mise en œuvre d'un tel procédé.

### ÉTAT DE LA TECHNIQUE ANTÉRIEURE

De nos jours, les processus industriels visent à être optimisés de façon à répondre aux exigences en termes d'optimisation des ressources, de pollution minimale et contrôlée ainsi que de développement durable.

Une façon d'atteindre de tels buts consiste à développer de nouvelles techniques analytiques réalisant des mesures en ligne dans le cœur du processus. Les améliorations conférées par de telles techniques présentent de nombreux avantages comme le contrôle en temps réel du processus.

L'optode pH constitue un exemple particulier d'une telle technique analytique. Une optode pH se définit classiquement comme une fibre optique sur laquelle est fixé un indicateur coloré de pH. Comme le spectre d'absorbance ou les propriétés de fluorescence de l'indicateur coloré varie(nt) en fonction du pH et ce, dans une gamme donnée pour chaque indicateur coloré, les changements de ce spectre ou de ces propriétés sont utilisés pour déterminer ou poursuivre le pH du milieu dans lequel est placée l'optode pH. La présence de plusieurs indicateurs colorés de pH utilisables sur des gammes de pH différentes permet de couvrir, en totalité, l'ensemble de la gamme de pH.

Ainsi, à titre d'exemples, les optodes pH peuvent être utilisées pour mesurer le pH dans le suivi de la dégradation des bétons (milieu basique), dans l'analyse environnementale (milieu neutre), dans l'analyse physiologique et le diagnostic médical (milieu neutre, acide ou basique) ou encore dans le contrôle des processus de retraitements des déchets nucléaires (milieu acide).

Les avantages des optodes pH sont multiples : il s'agit d'un système petit, peu coûteux, isolé électriquement, insensible aux interférences électromagnétiques, biocompatible, ne nécessitant aucune électrode de référence et permettant des mesures du pH réalisées à distance du site avec des temps de réponse courts ce qui permet un suivi en temps réel du pH.

Plusieurs optodes pH existent actuellement et ces dernières peuvent être classées en trois catégories liées au procédé mis en œuvre pour les préparer.

La première de ces catégories concerne les optodes pH dans lesquelles l'indicateur coloré est piégé dans une matrice sol/gel que l'on vient fixer en bout de fibre optique **[1]** : il s'agit donc d'un piégeage physique de l'indicateur. Cette technique souffre en général d'une inhomogénéité de la couche déposée et de risques de lessivages des colorants dus à la présence de fissures. A noter que dans **[1],** une perte de 40% du signal au bout de 40 jours est obtenue lorsque l'optode pH est placée dans une solution d'acide nitrique à 1 M. En variante, dans cette catégorie, un disque de colorant peut être collé en bout de fibre mais la tenue dans le temps du disque est limitée à cause des liquides qui viennent fragiliser l'interface disque/bout de fibre.

La seconde comprend le dépôt de colorants par des méthodes électrostatiques au sein d'un film mince de polymère en procédant par couches successives ou, selon la désignation anglaise, « Layer By Layer » **[2].** Cette technique d'auto-assemblage peut offrir une meilleure solution aux problèmes rencontrés avec les méthodes sol-gel. Toutefois, en raison de la nature des interactions électrostatiques, l'effet de la force ionique du milieu dont on souhaite déterminer le pH peut avoir son importance. Ainsi, la tenue de ces couches aux pH extrêmes n'est pas suffisante.

La troisième de ces catégories concerne le greffage de colorants via une liaison covalente directement sur la fibre. La présence de telles liaisons covalentes offre l'avantage d'une optode à laquelle les colorants sont liés de façon robuste, durable et efficace. A ce jour, de nombreuses approches différentes pour réaliser une liaison covalente ont été rapportées. La préparation de ces optodes par liaison covalente directement sur les substrats est relativement compliquée techniquement et nécessite du temps. Ainsi, la technique dite chimie-click permet de créer une liaison covalente mais avec une seule couche de principe actif ce qui engendre un signal faible **[3].** De même, la technique CPG pour « Controlled Pore Glass » notamment décrite par **[4]** est extrêmement difficile à mettre en œuvre et demande un temps de préparation très long. Ce troisième groupe concerne de manière majoritaire les fibres de type plastique, comme les fibres en polyméthacrylate de méthyle (PMMA).

Les inventeurs se sont donc fixé pour but de fournir un procédé simple et facile à mettre en œuvre pour préparer un support solide au niveau duquel des indicateurs colorés de pH sont solidement greffés et ce, sous forme de couches épaisses, et susceptible d'être utilisé pour mesurer des valeurs pH dans des milieux variés.

Fages et al, 2013 (« Study and design of an optode for pH measurement », Proc. SPIE 8774, Optical Sensors, pages 87741F-1 à 87741F-8) ont montré que le procédé décrit dans la demande internationale WO 2008/078052 **[5]** peut être mis en œuvre pour greffer des indicateurs colorés présentant au moins une fonction amine primaire aromatique à la surface d'un support solide.

### EXPOSÉ DE L'INVENTION

La présente invention permet d'atteindre le but que se sont fixé les inventeurs et concerne donc un procédé simple pour préparer un support solide sur lequel sont greffés des indicateurs colorés sans que ce greffage n'affecte la propriété de ces indicateurs pour déterminer des paramètres chimiques.

Il convient, tout d'abord, de noter qu'il n'était pas évident pour l'homme du métier d'utiliser, comme précurseurs de sel d'aryle diazonium tels que définis dans la demande internationale WO 2008/078052 **[5],** des indicateurs colorés présentant une fonction amine primaire aromatique. Il n'était pas non plus évident que greffer des indicateurs colorés n'affecterait pas leurs propriétés d'indicateurs colorés et ce, notamment du fait de la perte d'un groupement -NH₂ qui pouvait être naturellement présent sur la molécule de l'indicateur coloré. En effet, les inventeurs ont observé que le greffage de Rouge Neutre par le procédé selon l'invention avec perte de l'amine primaire présente sur cet indicateur coloré en solution entraîne des modifications avec un décalage du maximum d'absorption et une modification de la gamme de pH d'intérêt (voir paragraphe III.A dans la partie expérimentale ci-après).

De plus, les inventeurs ont montré que pour obtenir un greffage suffisant d'indicateurs colorés pour rendre utilisable le support solide en vue de la détermination de paramètres chimiques, le procédé de greffage chimique radicalaire décrit dans la demande internationale WO 2008/078052 **[5]** devait être modifié, d'une part, en déterminant la durée optimale de l'étape de greffage i.e. l'étape durant laquelle le sel d'aryle de diazonium issu de l'indicateur coloré comprenant au moins une fonction amine primaire est soumis à des conditions non électrochimiques et, d'autre part, en répétant des étapes de greffage séparées les unes des autres par des étapes de lavage de façon à éliminer de la surface du support des molécules non greffées et juste adsorbées physiquement.

Fait intéressant, la présente invention s'applique à tout type de support solide sur lequel on souhaite greffer des indicateurs colorés. De même, ces derniers peuvent être des indicateurs colorés sensibles au pH mais aussi un quelconque indicateur coloré dont le spectre d'absorption ou les propriétés de fluorescence varie(nt) en fonction d'un quelconque paramètre chimique.

Ainsi, la présente invention concerne un procédé de greffage, de façon covalente, à la surface d'un support solide, d'un indicateur coloré présentant au moins une fonction amine primaire aromatique comprenant les étapes consistant à :
a) préparer, à partir dudit indicateur coloré présentant au moins une fonction amine primaire aromatique, le sel de diazonium correspondant ;
b) mettre le support solide en contact avec une solution contenant le sel de diazonium préparé à l'étape (a) et soumettre ladite solution à des conditions non électrochimiques pendant une durée optimale de greffage moyennant quoi des chaînes organiques dont les unités sont des dérivés dudit sel de diazonium sont greffées, de façon covalente, à la surface dudit support solide ;
c) laver le support solide ainsi greffé ;
d) répéter les étapes (b) et (c) ou éventuellement les étapes (a) à (c) au moins une fois.

Le procédé selon la présente invention est un procédé de type greffage chimique radicalaire.

Le terme « greffage chimique radicalaire » a, dans la présente invention, la même définition que dans la demande internationale WO 2008/078052 **[5].** Il se réfère ainsi à l'utilisation d'entités moléculaires possédant un électron non apparié pour former des liaisons de type liaison covalente avec un support, lesdites entités moléculaires étant générées indépendamment du support sur lequel elles sont destinées à être greffées. La réaction radicalaire conduit donc à la formation de liaisons covalentes entre le support et la (ou les) chaîne(s) organique(s) greffée(s) i.e. le (ou les) oligomère(s) organique(s) greffé(s).

Les chaînes organiques ou les oligomères organiques greffé(e)s à la surface du support forment une couche organique qui peut être définie comme un film organique greffé à la surface du support.

Le (ou les) oligomère(s) organique(s) greffé(s) à la surface du support est un oligomère principalement issu de plusieurs unités monomères identiques dérivées du sel de diazonium obtenu à partir de l'indicateur coloré présentant au moins une fonction amine primaire aromatique. Au sens de la présente invention, par « surface » il faut entendre la partie extérieure d'un support solide, qui le limite en tout sens. L'invention s'applique à tout type de surface quelle que soit sa géométrie. Cette dernière peut être simple, comme une surface parfaitement plane, ou complexe, comme une surface rugueuse, ou présentant des cavités non obstruées et ce quel que soit le matériau constituant la surface et le reste du support solide dont elle dépend.

L'invention est applicable à une grande diversité de surface d'intérêt dont la composition peut être choisie parmi une grande variété de matériaux car le procédé met à profit un mécanisme d'assemblage de nature radicalaire ou impliquant des atomes porteurs d'électrons non appariés tels que carbène ou nitrène. Dans le procédé selon l'invention, la nature de la surface mise en œuvre influe peu sur le procédé de l'invention. Ainsi, la surface mise en œuvre dans le cadre de la présente invention peut être de nature organique ou non organique, et/ou de nature composite avec éventuellement une composition non uniforme. Elle peut être isolante, semi-conductrice ou conductrice de l'électricité.

Toute surface présentant un ou plusieurs atome(s) ou groupement(s) d'atomes pouvant être impliqué(s) dans une réaction d'addition ou de substitution radicalaire, tel que CH, les carbonyles (cétone, ester, acide, aldéhyde), OH, SH, les éthers, les amines, les halogènes, comme F, Cl, Br, est, notamment et non exclusivement, concernée par la présente invention.

Les surfaces de nature inorganique peuvent être notamment choisies parmi les matériaux conducteurs comme les métaux nobles ou non et les alliages métalliques, par exemple Ni, Zn, Au, Pt, Ti ou l'acier. Il peut également s'agir de matériaux semi-conducteurs comme Si, SiC, AsGa, Ga, etc. Il est également possible d'appliquer le procédé à des surfaces non conductrices comme les oxydes non conducteurs tels que SiO₂, Al₂O₃ et MgO. De manière plus générale, une surface inorganique peut être constituée, par exemple, d'un matériau amorphe, tel qu'un verre contenant généralement des silicates ou encore une céramique, aussi bien que cristallin comme le diamant ou du graphite pouvant être plus ou moins organisé.

A titre de surface de nature organique, on peut citer notamment des polymères naturels comme le latex ou le caoutchouc, ou des polymères artificiels. Il est également possible d'appliquer le procédé à des surfaces organiques plus complexes telles que des surfaces comprenant des polysaccharides, comme la cellulose pour le bois ou le papier, des fibres artificielles ou naturelles, comme le coton ou le feutre.

Avantageusement, le polymère artificiel mis en œuvre dans le cadre de la présente invention est un (co)polymère thermoplastique choisi dans le groupe constitué par :
- une polyoléfine telle qu'un polyéthylène, un polypropylène, un copolymère éthylène/propylène, un polybutylène, un polyméthylpentène, un copolymère éthylène/acétate vinylique, un copolymère éthylène/alcool vinylique, un(e) de leurs copolymères, de leurs mélanges et de leurs combinaisons ;
- un polyester tel qu'un poyéthylène téréphtalate éventuellement modifié par du glycol, un polybutylène téréphtalate, un polylactide, un polycarbonate, un(e) de leurs copolymères, de leurs mélanges et de leurs combinaisons ;
- un polyéther tel qu'un poly(oxyméthylène), un poly(oxyéthylène), un poly(oxypropylène), un poly(phénylène éther), un(e) de leurs copolymères, de leurs mélanges et de leurs combinaisons ;
- un polymère vinylique tel qu'un poly(chlorure de vinyle) éventuellement chloré, un poly(alcool vinylique), un poly(acétate de vinyle), un poly(acétal de vinyle), un poly(formal de vinyle), un poly(fluorure de vinyle), un poly(chlorure de vinyle/acétate de vinyle), un(e) de leurs copolymères, de leurs mélanges et de leurs combinaisons ;
- un polymère vinylidénique tel qu'un poly(chlorure de vinylidène), un poly(fluorure de vinylidène), un(e) de leurs copolymères, de leurs mélanges et de leurs combinaisons ;
- un polymère styrénique tel qu'un polystyrène, un poly(styrène/butadiène), un poly(acrylonitrile/butadiène/styrène), un poly(acrylonitrile/styrène), un poly(acrylonitrile/éthylène/propylène/styrène), un poly(acrylonitrile/styrène/acrylate), un(e) de leurs copolymères, de leurs mélanges et de leurs combinaisons ;
- un polymère (méth)acrylique tel qu'un polyacrylonitrile, un poly(acrylate de méthyle), un poly(méthacrylate de méthyle), un(e) de leurs copolymères, de leurs mélanges et de leurs combinaisons ;
- une polyamide tel qu'un poly(caprolactame), un poly(hexaméthylène adipamide), un poly(lauroamide), un polyéther-bloc-amide, un poly(métaxylylène adipamide), un poly(métaphénylène isophtalamide), un(e) de leurs copolymères, de leurs mélanges et de leurs combinaisons ;
- un polymère fluoré (ou polyfluoréthène) tel qu'un polytétrafluoroéthylène, un polychlorotrifluoroéthylène, un poly(éthylène/propylène) perfluoré, un poly(fluorure de vinylidène), un(e) de leurs copolymères, de leurs mélanges et de leurs combinaisons ;
- un polymère cellulosique tel qu'un acétate de cellulose, un nitrate de cellulose, une méthylcellulose, un carboxyméthylcellulose, un(e) de leurs copolymères, de leurs mélanges et de leurs combinaisons ;
- un poly(arylènesulfone) tel qu'un polysulfone, un polyéthersulfone, un polyarylsulfone, un(e) de leurs copolymères, de leurs mélanges et de leurs combinaisons ;
- un polysulfure tel que du poly(sulfure de phénylène) ;
- un poly(aryléther)cétone tel qu'un poly(éther cétone), un poly(éther éther cétone), un poly(éther cétone cétone), un(e) de leurs copolymères, de leurs mélanges et de leurs combinaisons ;
- une polyamide-imide ;
- une poly(éther)imide ;
- une polybenzimidazole ;
- un poly(indène/coumarone) ;
- un poly(paraxylylène) ;
- un de leurs copolymères, un de leurs mélanges et une de leurs combinaisons.

En variante, le (co)polymère artificiel mis en œuvre dans le cadre de la présente invention est un (co)polymère thermodurcissable choisi dans le groupe constitué par un aminoplaste tel que de l'urée-formol, de la mélanine-formol, de la mélanine-formol/polyesters, un(e) de leurs copolymères, de leurs mélanges et de leurs combinaisons ; un polyuréthane ; un polyester insaturé; un polysiloxane ; une résine formophénolique, époxyde, allylique ou vinylester; un alkyde ; une polyurée ; un polyisocyanurate ; un poly(bismaléimide) ; un polybenzimidazole ; un polydicyclopentadiène ; un de leurs copolymères, un de leurs mélanges et une de leurs combinaisons.

Par « indicateur coloré », on entend, dans le cadre de la présente invention, un composé chimique organique, synthétique ou naturel, présentant des propriétés d'absorption, d'émission ou de réémission dans un domaine allant de l'ultraviolet à l'infrarouge, i.e. dans une gamme de longueurs d'onde allant généralement de 280 à 5000 nm.

De plus, l'indicateur coloré mis en œuvre dans le cadre de la présente invention est sensible à au moins un élément et présente au moins une modification de ses propriétés spectrales suite à la mise en contact avec cet élément. Avantageusement, un tel élément est choisi dans le groupe constitué par un ion hydrogène, ion halogénure tel qu'un ion chlorure, un ion calcium, un ion sodium, un ion potassium ou l'oxygène. A noter que les indicateurs colorés sensibles aux ions hydrogène sont également désignés comme indicateurs sensibles au pH.

Enfin, l'indicateur coloré mis en œuvre dans le cadre de la présente invention présente au moins une fonction amine primaire aromatique.

Par « fonction amine primaire aromatique », on entend un groupement du type R-NH2 avec R représentant un groupe (hétéro)arylène éventuellement substitué.

Par « groupe arylène », on entend une structure carbonée aromatique constituée d'au moins un cycle aromatique comportant de 3 à 10 atomes de carbone et notamment de 4 à 8 atomes de carbone et, en particulier, de 6 atomes de carbone.

Par « groupe hétéroarylène », une structure carbonée hétéroaromatique constituée d'au moins un cycle hétéroaromatique comportant de 3 à 10 atomes de carbone et notamment de 4 à 8 atomes de carbone et, en particulier, de 6 atomes de carbone, le ou les hétéroatomes pouvant être N, O, P, Si ou S et notamment N, O, Si ou S. Les hétéroatomes peuvent en particulier interrompre un cycle aromatique et/ou séparer deux cycles aromatiques d'un groupement arylène. Dans ce dernier cas, les hétéroatomes peuvent se présenter sous forme de radicaux carboxyle ou thiocarbonyle.

Dans le cadre de la présente invention, on entend, par « groupe (hétéro)arylène substitué », un groupe (hétéro)arylène tel que précédemment défini, mono- ou polysubstitué par un groupement choisi parmi un halogène; une aminé; une diamine ; un carboxyle ; un carboxylate ; un aldéhyde ; un ester ; un éther ; un hydroxyle ; un halogène ; un (hétéro)alkyle éventuellement substitué notamment tel qu'un méthyle, un éthyle, un propyle ou un hydroxypropyle ; une aminé ; un amide ; un sulfonyle ; un sulfoxyde ; un sulfonate ; un acyle ; un vinyle ; un époxy; un phosphonate ; un acide sulfonique ; un isocyanate ; un thiol ; un glycidoxy, un acryloxy et l'un quelconque de leurs sels.

Typiquement, l'indicateur coloré mis en œuvre dans le cadre de la présente invention peut comprendre, dans sa structure chimique native, une telle fonction amine primaire aromatique. En variante, cette fonction a pu être introduite dans cette structure chimique native par des techniques classiques de chimie organique telles que des techniques de substitution ou en transformant une amine secondaire ou tertiaire aromatique en une amine primaire aromatique. Il est évident qu'un tel indicateur coloré ainsi modifié doit conserver les propriétés d'un indicateur coloré telles que précédemment définies mais éventuellement différentes vis-à-vis des propriétés de l'indicateur coloré non modifié.

A titre d'exemples particuliers d'indicateurs colorés sensibles au pH utilisables dans le cadre de la présente invention, on peut citer le Rouge Neutre (CAS 553-24-2), la Rhodamine 560 (CAS 13558-31-1), la Rhodamine 123 (CAS 62669-70-9), le Méthyl Violet 6B (Formule C₂₃H₂₆N₃⁺Cl⁻), le Rouge Congo (CAS 573-58-0) et le 2-aminophénol (CAS 95-55-6).

A titre d'exemples particuliers d'indicateurs colorés sensibles au pH utilisables dans le cadre de la présente invention, une fois modifiés pour qu'ils présentent au moins une fonction amine primaire aromatique, on peut citer le Bleu de Bromothymol (CAS 76-59-5), le Jaune de Méthyle (CAS 60-11-7), l'Hélianthine (CAS 547-58-6), le Rouge de Méthyle (CAS 845-10-3), le Rouge de Phénol (CAS 143-74-8), le Rouge de Crésol (CAS 1733-12-6), le Phénolphtaléine (CAS 5768-87-6), l'Alizarine (CAS 72-48-0), le Carmin d'Indigo (CAS 860-22-0), le Vert de Malachite (CAS 10309-95-2), la 6-Carboxyfluorescéine (CAS 3301-79-9) et l'acide 8-hydroxypyrène-1,3,6-trisulphonique (CAS 6358-69-6).

A titre d'exemples particuliers d'indicateurs colorés sensibles à un ion halogénure et notamment à un ion chlorure utilisables dans le cadre de la présente invention, une fois modifiés pour qu'ils présentent au moins une fonction amine primaire aromatique, on peut citer le nitrate de N,N'-diméthyl-9,9'-bis-acridinium (Lucigénine, CAS 235-97-1), le 6-méthoxy-N-(3-sulfopropyl)quinolinium (SPQ, CAS 83907-40-8) et le bromure de N-(éthoxycarbonylméthyl)-6-méthoxy-quinolinium (MQAE, CAS 162558-52-3).

A titre d'exemples particuliers d'indicateurs colorés sensibles à un ion calcium utilisables dans le cadre de la présente invention, une fois modifiés pour qu'ils présentent au moins une fonction amine primaire aromatique, on peut citer le N-[2-[(acétyloxy)meéthoxy]-2-oxoéthyl]-N-[4-[[[3',6'-bis(acétyloxy)-2',7'-difluoro-3-oxospiro[isobenzofuran-1(3H),9'-[9H]xanthen]-5-yl]carbonyl]amino]-2-[2-[2-[bis[2-[(acétyloxy)méthoxy]-2-oxoéthyl]amino]phénoxy]éthoxy]phényl]-glycine-(acétyloxy)méthyl ester (Oregon Green™ 488 BAPTA-1), le sel de N-[2-[2-[2-[bis(carboxyméthyl)amino]-5-[[(2',7'-difluoro-3',6'-dihydroxy-3-oxospiro[isobenzofuran-1 (3H),9'-[9H]xanthen]-5-yl)carbonyl]amino]phenoxy]éthoxy]-6-fluorophenyl]-N-(carboxyméthyl)-glycine-hexapotassium (Oregon Green™ 488 BAPTA-6F) et le sel de N-[2-[2-[2-[bis(carboxyméthyl)amino]-5-[[(2',7'-difluoro-3',6'-dihydroxy-3-oxospiro[isobenzofuran-1(3H),9'-[9H]xanthen]-5-yl)carbonyl]amino]phénoxy]éthoxy]-5-nitrophényl]-N-(carboxyméthyl)-glycine-hexapotassium (Oregon Green™ 488 BAPTA-5N).

A titre d'exemples particuliers d'indicateurs colorés sensibles à un ion sodium utilisables dans le cadre de la présente invention, une fois modifiés pour qu'ils présentent au moins une amine primaire aromatique, on peut citer le N,N'-[1,4,10-trioxa-7,13-diazacyclopentadécane-7,13-diylbis(2,5-diméthoxy-4,1-phénylène)]bis[3',6'-bis(acétyloxy)-2',7'-dichloro-3-oxo-spiro[isobenzofuran-1(3H),9'-[9H]xanthen]-5-carboxamide, (Sodium Green®, Molecular Probes, CAS 159952-49-5) et le N-(4-[1-(7-diéthylaminocoumarin-3-yl)-1H-1,2,3-triazol-4yl]phénylaza-18-crown-6-éther.

Un exemple particulier d'indicateur coloré sensible au potassium utilisable dans le cadre de la présente invention, une fois modifié pour qu'il présente au moins une fonction amine primaire aromatique, on peut citer le N-(2-methoxyethoxy)phenylaza-18-crown-6)-4-(coumarinyl)-1H-1,2,3-triazole.

A titre d'exemples particuliers d'indicateurs colorés sensibles à l'oxygène utilisables dans le cadre de la présente invention, une fois modifiés pour qu'ils présentent au moins une fonction amine primaire aromatique, on peut citer le complexe de ruthénium(II)-tris(4,7-diphenyl-1,10-phenanthroline)perchlorure (CAS 75213-31-9) et le complexe de ruthénium(II)-tris(4,7-diphenyl-1,10-phenanthroline)dichlorure (CAS 36309-88-3).

Dans le procédé selon la présente invention, l'étape (a) est une étape classique de la chimie organique et notamment du procédé de greffage chimique radicalaire décrit dans la demande internationale WO 2008/078052 **[5].** Elle consiste à transformer la fonction -NH₂ de l'amine primaire aromatique porté par l'indicateur coloré en une fonction diazonium -N₂⁺.

Tout protocole connu de l'homme du métier pour une telle transformation est utilisable dans le cadre de la présente invention. Typiquement, cette étape consiste à mettre l'indicateur coloré en présence soit de NaNO₂ dans un milieu aqueux acide soit de NOBF₄ en milieu organique. Pour un exposé détaillé des modes expérimentaux utilisables pour un tel protocole, l'homme du métier pourra se reporter à la littérature ouverte **[6].**

Dans le cadre du procédé selon l'invention, l'étape (b) comprend deux sous-étapes avec la première désignée sous-étape (i) consistant à mettre le support solide en contact avec une solution contenant le sel de diazonium préparé à l'étape (a) et la seconde désignée sous-étape (ii) consistant à soumettre ladite solution à des conditions non électrochimiques pendant une durée optimale de greffage.

Ces deux sous-étapes peuvent être réalisées simultanément ou l'une après l'autre avec la sous-étape (i) suivie de la sous-étape (ii) ou la sous-étape (ii) suivie de la sous-étape (i).

L'étape (b) et les sous-étapes (i) et (ii) sont des étapes classiques du procédé de greffage chimique radicalaire décrit dans la demande internationale WO 2008/078052 **[5].** A noter cependant que l'étape (b) présente une particularité vis-à-vis de ce procédé en ce qu'elle est mise en œuvre pendant une durée optimale prédéterminée.

Ainsi, la solution mise en œuvre lors de l'étape (b) est une solution réactive liquide comprenant le sel de diazonium préparé à l'étape (a) dans un solvant. Ce dernier peut être :
- soit un solvant protique, i.e. un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges ;
- soit un solvant aprotique, i.e. un solvant qui n'est pas susceptible de libérer un proton ou d'en accepter un dans des conditions non extrêmes et avantageusement choisi parmi la diméthylformamide (DMF), l'acétone, l'acétonitrile et le diméthyl sulfoxyde (DMSO) ;
- soit un mélange d'au moins un solvant protique et d'au moins un solvant aprotique.

Dans cette solution réactive, le sel de diazonium préparé à l'étape (a) est présent en une concentration comprise entre 10⁻⁶ et 5 M, notamment entre 10⁻⁴ et 1 M et, en particulier entre 10⁻² et 10⁻¹ M.

De plus, le pH de la solution réactive est inférieur à 7, typiquement inférieur ou égal à 3. Il est recommandé de travailler à un pH compris entre 0 et 3. Si nécessaire, le pH de la solution peut être ajusté à la valeur désirée à l'aide d'un ou plusieurs agents acidifiants bien connus de l'homme du métier, par exemple à l'aide d'acides minéraux ou organiques tels que l'acide chlorhydrique, l'acide sulfurique, etc.

Le sel de diazonium peut soit être introduit en l'état dans la solution réactive liquide telle que définie précédemment, soit être préparé *in situ* dans cette solution. Dans cette dernière variante, l'étape (a) et l'étape (b) sont de fait mises en œuvre successivement dans la solution réactive : on parle de procédé « one pot ».

Dans le procédé selon la présente invention, toutes les conditions non électrochimiques envisagées dans la demande internationale WO 2008/078052 **[5]** sont utilisables dans le cadre de la sous-étape (ii) durant l'étape (b). Pour rappel, de telles conditions non électrochimiques sont des conditions qui permettent la formation d'entités radicalaires à partir du sel de diazonium préparé à l'étape (a) en l'absence de l'application d'une quelconque tension électrique à la solution le contenant ou au support solide sur lequel doit avoir lieu le greffage.

Ces conditions impliquent des paramètres tels que, par exemple, la température, la nature du solvant présent dans la solution réactive, la présence d'un additif particulier, l'agitation, la pression alors que le courant électrique n'intervient pas lors de la formation des entités radicalaires. Les conditions permettant la formation d'entités radicalaires sont nombreuses et ce type de réaction est connu et étudié en détail dans l'art antérieur.

Il est ainsi par exemple possible d'agir sur l'environnement thermique, cinétique, chimique ou photochimique du sel de diazonium préparé à l'étape (a) afin de le déstabiliser pour qu'il forme une entité radicalaire. Il est bien entendu possible d'agir simultanément sur plusieurs de ces paramètres.

Dans le cadre de la présente invention, les conditions permettant la formation d'entités radicalaires sont typiquement choisies dans le groupe constitué par les conditions thermiques, les conditions cinétiques, les conditions chimiques, les conditions photochimiques et leurs combinaisons auxquelles le sel de diazonium préparé à l'étape (a) est soumis. Avantageusement, les conditions mises en œuvre dans le cadre de la présente invention sont choisies dans le groupe constitué par les conditions thermiques, les conditions chimiques, les conditions photochimiques et leurs combinaisons entre elles et/ou avec les conditions cinétiques. Les conditions mises en œuvre dans le cadre de la présente invention sont des conditions chimiques ou photochimiques.

L'environnement thermique est fonction de la température. Son contrôle est aisé avec les moyens de chauffage habituellement employés par l'homme du métier. L'utilisation d'un environnement thermostaté présente un intérêt particulier puisqu'il permet un contrôle précis des conditions de réaction.

L'environnement cinétique correspond essentiellement à l'agitation du système et aux forces de frottement. Il ne s'agit pas ici de l'agitation des molécules en elle-même (élongation de liaisons etc.), mais du mouvement global des molécules. Ainsi, la solution contenant le sel de diazonium préparé à l'étape (a) est soumise à une agitation mécanique et/ou à un traitement aux ultra-sons. Dans une première variante, on soumet la solution contenant le sel de diazonium préparé à l'étape (a) à un traitement aux ultrasons.

Enfin, l'action de rayonnements divers tels que rayonnements dans le visible, rayons UV notamment aux moyens d'une lampe UV, d'une lampe excimère ou d'un laser. La longueur d'onde employée sera choisie, sans aucun effort inventif, en fonction du sel de diazonium préparé à l'étape (a) utilisé.

Dans le cadre des conditions chimiques, on emploie un ou plusieurs amorceur(s) chimique(s). La présence d'amorceurs chimiques est souvent couplée à des conditions environnementales non chimiques, telles qu'exposées ci-dessus. Typiquement, un amorceur chimique mis en œuvre dans les conditions environnementales choisies agit sur le sel de diazonium préparé à l'étape (a) et engendre, à partir de celui-ci, la formation d'entités radicalaires. Il est également possible d'employer des amorceurs chimiques dont l'action n'est pas liée essentiellement aux conditions environnementales et qui peuvent agir sur de vastes plages de conditions thermiques ou encore cinétiques. L'amorceur sera de préférence adapté à l'environnement de la réaction, par exemple au solvant employé.

Il existe de nombreux amorceurs chimiques. On en distingue généralement trois types en fonction des conditions environnementales employées :
- les amorceurs thermiques dont les plus courants sont les peroxydes ou les composés azoïques. Sous l'action de la chaleur, ces composés se dissocient en radicaux libres. Dans ce cas, la réaction est effectuée à une température minimum correspondant à celle nécessaire à la formation de radicaux à partir de l'amorceur. Ce type d'amorceurs chimiques est en général utilisé spécifiquement dans un certain intervalle de température, en fonction de leur cinétique de décomposition ;
- les amorceurs photochimiques permettent la production de radicaux par des mécanismes plus ou moins complexes. Le Bu₃SnH et l'I₂ appartiennent aux amorceurs photochimiques ;
- les amorceurs essentiellement chimiques, ce type d'amorceurs agissant rapidement et dans des conditions normales de température et de pression sur le sel de diazonium préparé à l'étape (a) pour lui permettre de former des radicaux. De tels amorceurs ont généralement un potentiel d'oxydoréduction qui est inférieur au potentiel de réduction du sel de diazonium préparé à l'étape (a) utilisé dans les conditions de réaction. Selon la nature du sel de diazonium préparé à l'étape (a), il peut ainsi s'agir par exemple d'un métal réducteur, tel que du fer, zinc, cuivre ou nickel ; d'un métallocène ; d'un réducteur organique comme l'acide hypophosphoreux (H₃PO₂) ou l'acide ascorbique ; d'une base organique ou inorganique dans des proportions suffisantes pour permettre une déstabilisation du sel d'aryle clivable.

Avantageusement, le métal réducteur utilisé en tant qu'amorceur chimique se présente sous forme finement divisée, comme de la laine (également appelée plus communément « paille ») métallique ou de la limaille métallique et typiquement de la poudre de fer est mise en œuvre.

Comme précédemment expliqué, l'étape (b) se distingue des procédés de greffage chimique radicalaire déjà décrits en ce que le temps pendant lequel la solution réactive est soumise à des conditions non électrochimiques i.e. le temps de greffage a été présélectionné vis-à-vis de son caractère optimal.

Selon l'invention, la durée optimale de greffage est déterminée préalablement à l'étape (b) du procédé selon la présente invention. Le procédé mis en œuvre pour déterminer la durée optimale de greffage pour un indicateur coloré donné consiste à :
a) réaliser une pluralité d'expériences, chaque expérience étant réalisée pour une période T, subdivisée régulièrement en n sous-périodes, n étant un nombre entier supérieur ou égal à 1, différent pour chaque expérience,
   chaque sous-période correspondant à une étape de greffage chimique radicalaire de l'indicateur coloré à la surface d'un support solide et chaque étape de greffage étant suivie d'au moins une étape de lavage,
β) à l'issue de la période T, déterminer la quantité d'indicateur coloré greffé pour chaque expérience, normaliser la quantité déterminée pour chaque expérience par rapport à la quantité déterminée pour l'expérience où n est égal à 1 et déterminer l'expérience E pour laquelle la quantité normalisée est maximale moyennant quoi la durée optimale est T/nₑ avec nₑ correspondant à la valeur de n lors de l'expérience E.

Tout ce qui a été précédemment expliqué vis-à-vis des étapes (a) et (b) et notamment concernant le support solide, la solution réactive, la quantité d'indicateur coloré et les conditions non électrochimiques s'applique également à l'étape de greffage chimique radicalaire de l'étape (α).

Chaque étape de greffage est suivie d'au moins une étape de lavage. Cette dernière vise à éliminer les indicateurs colorés juste physiquement adsorbés à la surface du support solide et non greffés, directement ou indirectement, au moyen d'une ou de plusieurs liaison(s) covalente(s) à cette surface.

Avantageusement, chaque étape de greffage est suivie d'un ou plusieurs lavage(s) de la surface du support solide, aux moyens de solutions de lavage identiques ou différentes. En particulier, après chaque étape de greffage, sont mis en œuvre au moins deux lavages ou au moins trois lavages de ladite surface du support solide. Les lavages peuvent être effectués avec une solution de lavage identique ou différente. En effet, on peut envisager d'utiliser une solution de lavage identique à chaque lavage, des solutions de lavage différentes d'un lavage à l'autre ou des solutions de lavage identiques ou différentes d'un lavage à l'autre. Les lavages peuvent présenter des durées identiques ou différentes typiquement de quelques secondes (par exemple 5 s, 10 s, 15 s ou 30 s) à quelques minutes (1 min, 2 min, 3 min, 5 min, 10 min ou 15 min). Le ou les lavage(s) est(sont) effectué(s) en présence d'ultrasons et à température ambiante (i.e. 23°C ± 5°C).

N'importe quelle solution de lavage connue de l'homme du métier est utilisable dans le cadre de l'étape (b) du procédé selon l'invention. Cette solution comprend typiquement un solvant dans lequel l'indicateur coloré est soluble. Ce solvant est avantageusement choisi dans le groupe constitué par les solvants protiques tels que précédemment définis, les solvants aprotiques tels que précédemment définis ou un de leurs mélanges.

A titre d'exemples et de façon non exhaustive, la solution de lavage mise en œuvre durant un quelconque des lavages est choisie dans le groupe constitué par l'eau, l'eau distillée, l'eau déminéralisée, l'eau désionisée, un alcool tel que de l'éthanol, de l'acétone ou un de leurs mélanges.

Avantageusement, le premier lavage suite à l'étape de greffage est précédé de l'élimination de la solution réactive alors en contact avec la surface du support solide. Cette élimination peut être notamment effectuée par tapotement, par absorption ou par aspiration ou encore en retirant le support solide de la solution réactive.

Dans une forme de mise en œuvre particulière, chaque étape de greffage est suivie d'une première étape de lavage dans de l'eau puis d'une seconde étape de lavage dans de l'éthanol et enfin d'une troisième et dernière étape de lavage dans l'acétone, ces trois étapes de lavage étant réalisées en présence d'ultrasons.

L'homme du métier saura déterminer la période T et le nombre n à utiliser pour chaque expérience sans effort inventif. Typiquement, la période T peut durer de 10 min à 2 h, notamment de 20 min à 1 h et, en particulier, 30 min. A noter que, dans la partie expérimentale ci-après, un exemple particulier d'un tel protocole est donné pour le Rouge Neutre et la Rhodamine 560. Dans cet exemple, la période T est de 30 min et les différentes valeurs de n utilisées sont 1, 2, 3, 6, 10, 15 et 30.

Une fois la période T de greffage écoulée, le greffage de l'indicateur coloré à la surface du support solide est quantifié pour chaque expérience. Il est possible d'employer tout moyen d'analyse pour contrôler la présence d'une couche d'indicateurs colorés et déterminer son épaisseur, de tels moyens peuvent notamment être des mesures de spectrométrie infrarouge (IR) ou de spectroscopie de photoélectrons X (XPS) et ultraviolets (UV) en fonction des atomes et groupes chimiques présents sur l'indicateur coloré employé.

Afin de comparer les résultats, la valeur de greffage quantifiée pour chaque expérience est normalisée par rapport à la valeur de greffage quantifiée pour l'expérience ne mettant en œuvre qu'une étape de greffage unique durant la période T. L'expérience E présentant la valeur de greffage normalisée la plus élevée vis-à-vis de l'ensemble des valeurs de greffage normalisées sert à déterminer la durée optimale du greffage puisque cette dernière correspond à la durée des sous-périodes mises en œuvre durant l'expérience E.

Dans le procédé selon la présente invention, l'étape (c) vise également à éliminer les indicateurs colorés juste physiquement adsorbés à la surface du support solide et non greffés, directement ou indirectement, au moyen d'une ou de plusieurs liaison(s) covalente(s) à cette surface. Cette élimination libère des sites à la surface du support solide qui pourront être occupés par des polymères organiques dérivés de l'indicateur coloré, lors des étapes de greffage subséquentes.

Tout ce qui a été précédemment décrit pour la ou les étape(s) de lavage lors de la détermination de la durée optimale de greffage s'applique *mutatis mutandis* à l'étape (c).

Comme précédemment expliqué, l'étape (d) du procédé de greffage selon l'invention est une autre caractéristique le distinguant du procédé tel que décrit dans la demande internationale WO 2008/078052 **[5].** L'étape (d) consiste à répéter les étapes de greffage (étape (b) et éventuellement étape (a)) séparées les unes des autres par des étapes de lavage (étape (c)) de façon à éliminer, à chaque fois, de la surface du support solide des indicateurs colorés non greffés et juste adsorbés physiquement.

A noter que lors de l'étape (d), il n'est pas forcément nécessaire de répéter l'étape (a). En effet, si une grande quantité de sel de diazonium issu de l'indicateur coloré a été initialement préparée, ce sel initialement préparé est utilisé lors de ou des étape(s) (b). En variante, lorsque le protocole mis en œuvre est un protocole de type « one pot » tel que précédemment défini, l'étape (a) devra être répétée à chaque répétition de l'étape (b).

Ainsi, la succession des étapes (b) et (c) ou éventuellement des étapes (a) à (c) peut être répété(e) typiquement de 1 à 40 fois, notamment de 5 à 30 fois et en particulier, de 10 à 20 fois et ce, notamment en vue d'obtenir un greffage d'une quantité d'indicateurs colorés suffisante pour envisager l'utilisation du support solide pour déterminer un paramètre chimique pertinent au vu des indicateurs colorés greffés.

La présente invention concerne également un kit d'éléments susceptible d'être utilisé lors de la mise en œuvre d'un procédé tel que précédemment défini. Un tel kit comprend notamment :
- dans un premier compartiment, un indicateur coloré présentant au moins une fonction amine primaire aromatique tel que précédemment défini,
- dans un second compartiment, au moins un élément nécessaire pour transformer la fonction -NH₂ de l'amine primaire aromatique portée par l'indicateur coloré en une fonction diazonium -N₂⁺ (par exemple, une solution de NaNO₂ dans un milieu aqueux acide, ou une solution de NOBF₄, en milieu organique),
- éventuellement, dans un troisième compartiment, au moins un élément nécessaire pour élaborer une espèce radicalaire à partir d'une fonction diazonium -N₂⁺ tel qu'un amorceur chimique, et
- éventuellement, dans un quatrième compartiment, un support solide tel que précédemment défini i.e. un support solide à la surface duquel on souhaite greffer des indicateurs colorés.

Le kit d'éléments selon l'invention peut également comprendre, dans un cinquième compartiment, un élément nécessaire au lavage du support greffé.

La présente invention concerne également un support solide directement obtenu par mise en œuvre d'un procédé selon la présente invention. Un tel support présente à sa surface des chaînes organiques dont les unités sont des dérivés du sel de diazonium obtenu à partir de l'indicateur coloré présentant au moins une fonction amine primaire aromatique.

D'autres caractéristiques et avantages de la présente invention apparaîtront encore à l'homme du métier à la lecture des exemples ci-après donnés à titre illustratif et non limitatif, en référence aux figures annexées.

### BRÈVE DESCRIPTION DES DESSINS

La Figure 1 présente le spectre IR du Rouge Neutre greffé sur une lame d'or fine.
La Figure 2 présente le spectre IR de la Rhodamine 560 greffée sur une lame d'or fine.
La Figure 3 présente les transmittances IR normalisées en fonction de différents séquençages pour le Rouge Neutre (Figure 3A) et la Rhodamine 560 (Figure 3B).
La Figure 4 présente la hauteur de la bande IR en fonction du nombre de cycles pour le Rouge Neutre (Figure 4A) et la Rhodamine 560 (Figure 4B).
La Figure 5 présente l'augmentation de la sensibilité (absorbance) en fonction de l'épaisseur de couche sensible déposée.
La Figure 6 présente le spectre d'absorption dans le visible du Rouge Neutre greffé sur une lame d'or fine à différentes valeurs de pH (Figure 6A) et la variation du pic d'absorbance à 550 nm en fonction du pH (Figure 6B).
La Figure 7 présente l'absorbance à 560 nm en fonction du pH mesurée sur lame de verre et Rhodamine 560.
La Figure 8 présente le spectre IR de la lame d'or recouverte de PMMA (PMMA) et comparé au spectre de la lame d'or (Au).
La Figure 9 présente le spectre IR d'une lame d'or recouverte de PMMA (PMMA), d'une lame d'or normale greffée rouge neutre (Au + RN) et d'une lame d'or recouverte de PMMA et greffée rouge neutre (PMMA + RN).

### EXPOSÉ DÉTAILLÉ DE MODES DE RÉALISATION PARTICULIERS

### I. Remarques générales

Les inventeurs ont utilisé le procédé de greffage chimique radicalaire tel que décrit dans la demande internationale WO 2008/078052 **[5].**

Le substrat de référence dans ce procédé est une lame d'or se présentant généralement sous forme d'une lame de verre sur laquelle est déposée une couche de chrome d'environ 15 nm, elle-même recouverte d'une couche d'or d'environ 200 nm.

Toutefois, les travaux présentés ci-après ont été réalisés sur une lame d'or fine se présentant sous forme d'une lame de verre sur laquelle est déposée une couche de chrome d'environ 3 nm, elle-même recouverte d'une couche d'or d'environ 27 nm.

### II. Séquençage

A noter que toutes les solutions utilisées lors du séquençage sont sous agitation mécanique et que les concentrations utilisées en indicateurs colorés sont de 2 g.L⁻¹ soit 7,4 mmol.L⁻¹ et de 0,2 g.L⁻¹ soit 0,5 mmol.L⁻¹ respectivement pour le Rouge Neutre et pour la Rhodamine 560.

### 11.1. Détermination de la durée optimale d'un bain

### A. Rouge Neutre

Dans un bêcher: 25 mL de solution de Rouge Neutre (0,1 g de rouge neutre dans 25 mL de HCl 0,1 mol.L⁻¹) + 25 mL de solution de NaNO₂ (1 équivalent molaire par rapport au rouge neutre, soit 0,024 g dans 25 mL HCl 0,1 mol.L⁻¹) (M(rouge neutre) = 269 g.mol⁻¹, M(NaNO₂) = 69 g.mol⁻¹). Dans cette solution, le rouge neutre est transformé en le sel de diazonium correspondant.

De la poudre de fer correspondant à la condition non électrochimique telle que définie dans le procédé selon l'invention est ajoutée en excès (environ 1 g) pour réduire le sel de diazonium.

7 lames d'or sont mises en contact avec la solution réactive pendant un temps total de réaction de 30 min et, pour chacune des lames, avec un séquençage précis à savoir :
1) 1 bain de 30 min
2) 2 bains de 15 min
3) 3 bains de 10 min
4) 6 bains de 5 min
5) 10 bains de 3 min
6) 15 bains de 2 min
7) 30 bains de 1 min

Entre deux bains, chacune des lames (2) à (8) est rincée par de l'eau, de l'éthanol et de l'acétone, en présence d'ultrasons.

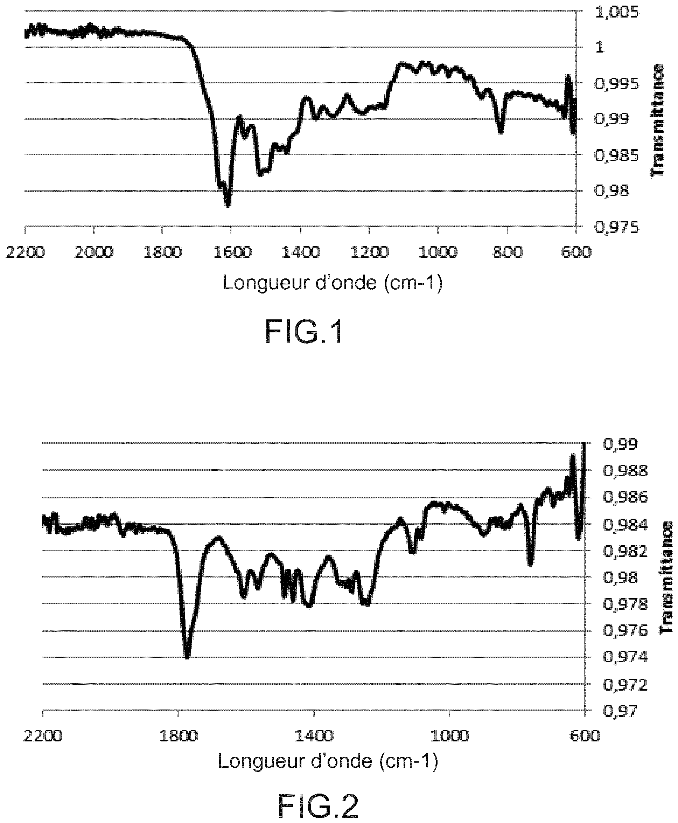

Puis, chaque lame est passée au spectromètre infrarouge et la transmittance de la bande aromatique à 1600 - 1650 cm⁻¹ est mesurée (Figure 1).

### B. Rhodamine 560

Un protocole comparable à celui mis en œuvre avec le rouge neutre (7 lames + même séquençage) a été utilisé avec la rhodamine 560 dans les conditions suivantes : 25 mL de solution de rhodamine 560 (0,01 g de rhodamine 560 dans 25 mL de (HCl 0,5 mol.L⁻¹ + éthanol 1:1 volume)) + 25 mL de solution de NaNO₂ (2 équivalents molaires par rapport à la rhodamine 560, soit 0,0038 g dans 25 mL (HCl 0,5 mol.L⁻¹ + éthanol 1:1 volume)) (M(rhodamine 560) = 367 g.mol⁻¹, M(NaNO₂) = 69 g.mol⁻¹).

Puis de la poudre de fer est également ajoutée en excès (environ 0,2 g).

Chaque lame est passée au spectromètre infrarouge, et la transmittance de la bande due au carbonyle C=O de la fonction acide carboxylique à 1770 cm⁻¹ mesurée (Figure 2).

### C. Résultats

Ces expériences ont été répétées quatre fois pour chaque indicateur coloré. De manière à comparer les résultats, toutes les transmittances ont été normalisées par rapport à la transmittance obtenue pour la lame (1) i.e. un bain unique de 30 min.

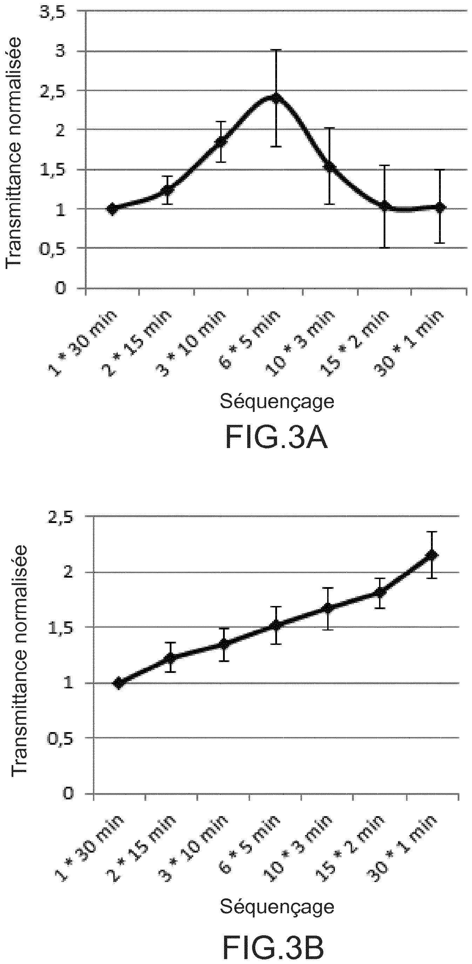

Les résultats présentés Figure 3 montrent clairement que la durée optimale du bain est de 5 min pour le rouge neutre (Figure 3A) et de 1 min pour la rhodamine 560 (Figure 3B).

### II.2. Multiplication du nombre de bains

### A. Rouge neutre

Une solution contenant le sel d'aryle diazonium correspondant au rouge neutre est préparée comme décrit au point II.1.A, ci-après désignée solution de diazonium.

A 10 mL de solution de diazonium, sont ajoutées de la poudre de fer en excès et une lame d'or pendant 5 min. Puis, la lame est nettoyée par de l'eau, de l'éthanol et de l'acétone, en présence d'ultrasons avant que la bande IR aromatique à 1600 - 1650 cm⁻¹ ne soit mesurée.

Le même cycle est répété 17 fois i.e. 17 bains de 5 min pendant lesquels la lame d'or est mise en contact avec le sel d'aryle diazonium dérivé du rouge neutre en présence d'une condition non électrochimique (poudre de fer) avec, entre chaque bain, rinçage de la lame et mesure IR.

### B. Rhodamine 560

Une solution contenant le sel d'aryle diazonium correspondant à la rhodamine 560 est préparée selon une variante du procédé décrit au point II.1.B à savoir en mettant 0,02 g de rhodamine et 0,0076 g de NaNO₂ dans 100 mL de (HCl 0,5 M + EtOH 1:1 volume).

Cette solution est mise en contact avec une lame d'or en présence d'un excès de poudre de fer pendant 1 min avant d'être nettoyée par de l'eau, de l'éthanol et de l'acétone, en présence d'ultrasons. La mesure IR est réalisée tous les 3 bains d'1 min et 17 mesures IR sont réalisées.

### C. Résultats

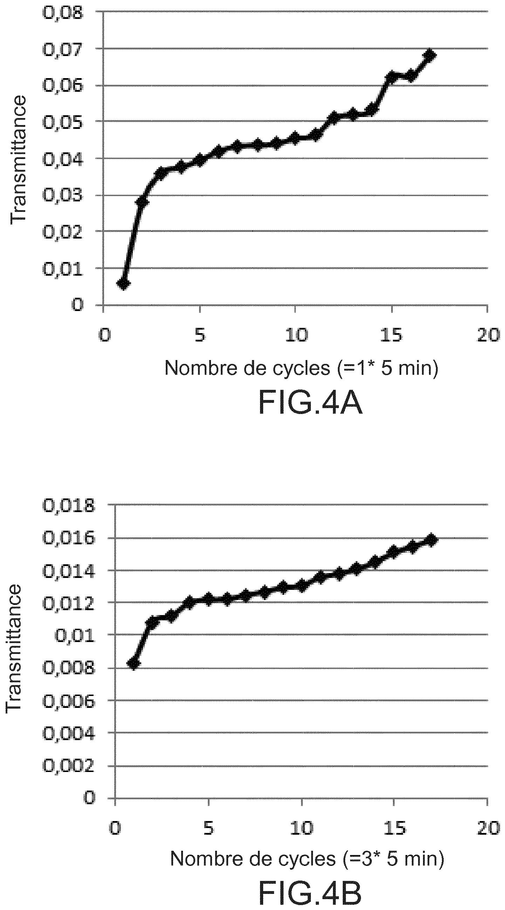

Les mesures IR obtenues avec le rouge neutre et la rhodamine 560 sont présentées respectivement à la Figure 4A et à la Figure 4B.

Dans les deux cas, la transmittance augmente avec le nombre de cycles ce qui prouve qu'en multipliant le nombre de cycles, la quantité de colorants sur les lames augmente.

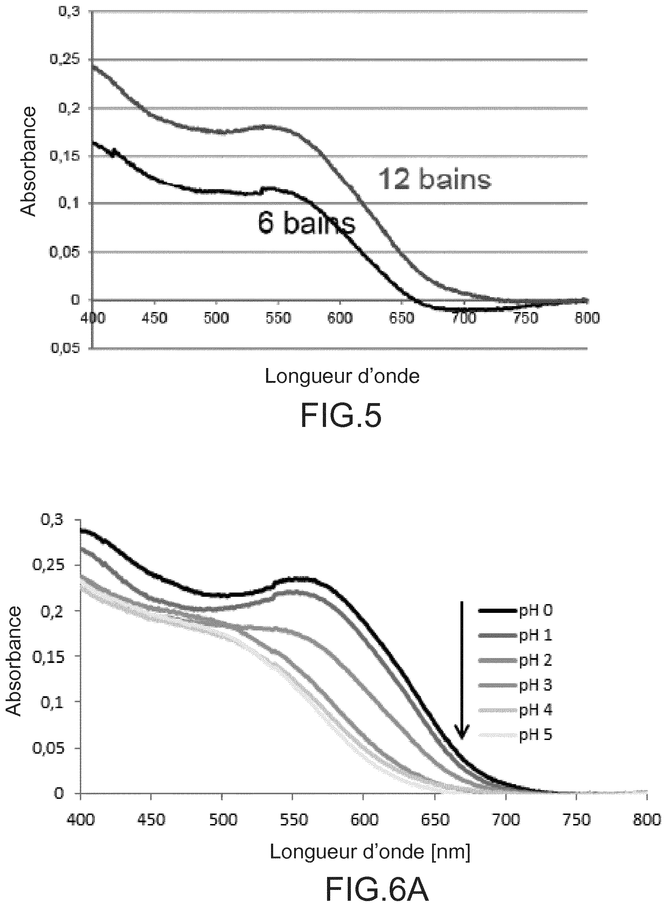

La méthode de séquençage est donc efficace pour accroître l'épaisseur de la couche d'indicateurs colorés et donc la sensibilité et la précision d'un support solide ainsi greffé en vue de la détermination de paramètres chimiques. A cet effet, il convient de considérer le spectre UV-visible à pH 1 d'une lame d'or greffée par du rouge neutre après 6 puis 12 bains de 5 min (Figure 5).

### III. Variations optiques des colorants greffés

Comme une fois greffés les colorants ont perdu l'amine primaire aromatique naturellement présente sur le colorant, il convient de vérifier que le Rouge Neutre et la Rhodamine 560 ont conservé leurs propriétés de variations d'absorption de la lumière en fonction du pH du milieu.

Aussi, une lame d'or greffée avec soit du rouge neutre, soit de la rhodamine 560 est placée dans une cellule optique d'un spectrophotomètre UV-Vis. La lumière passe à travers la cellule et la lame ce qui permet de mesurer le signal optique dû au colorant greffé. De plus, en faisant varier le pH dans la cellule, il est possible de vérifier les variations du spectre d'absorption.

### A. Rouge Neutre

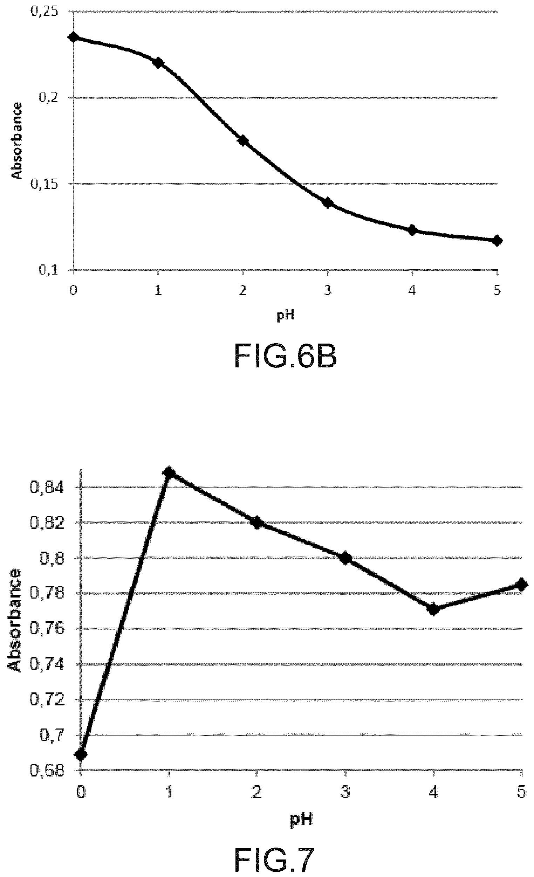

Le spectre d'absorption présenté à la Figure 6 montre qu'il existe des variations en fonction du pH des propriétés optiques du rouge neutre une fois greffé. En effet, en comparant ce résultat avec ceux obtenus pour du rouge neutre dissous dans des solutions, deux changements peuvent être observés :
- le maximum d'absorption est à 550 nm pour le rouge neutre greffé, alors qu'il se trouve à 520 nm pour le rouge neutre en solution ; et
- la gamme de pH à laquelle le rouge neutre greffé peut être utilisé se situe entre 1 et 4, alors que cette gamme pour du rouge neutre en solution se trouve entre 5 et 8.

Ces changements sont très certainement la conséquence de la perte de l'amine primaire aromatique perdue durant le greffage, ce qui induit un changement dans le système conjugué des cycles aromatiques responsable de l'absorption dans le visible du rouge neutre.

### B. Rhodamine 560

La Figure 7 présente les variations en fonction du pH du pic d'absorbance à 560 nm de la rhodamine 560 greffée sur une lame de verre.

### IV. Greffage du rouge neutre sur du PMMA

### IV.1. Préparation d'une lame de PMMA

Pour obtenir une lame de PMMA, environ 1,5 g de PMMA sont dissous dans 100 mL de *N,N*-diméthylformamide (DMF), puis une lame d'or est trempée dans la solution de PMMA.

Ensuite, la lame est ressortie du bain et laissée à sécher à l'air, en utilisant un peu d'acétone, avant séchage total, pour enlever le DMF qui peut rester piégé dans la couche de PMMA.

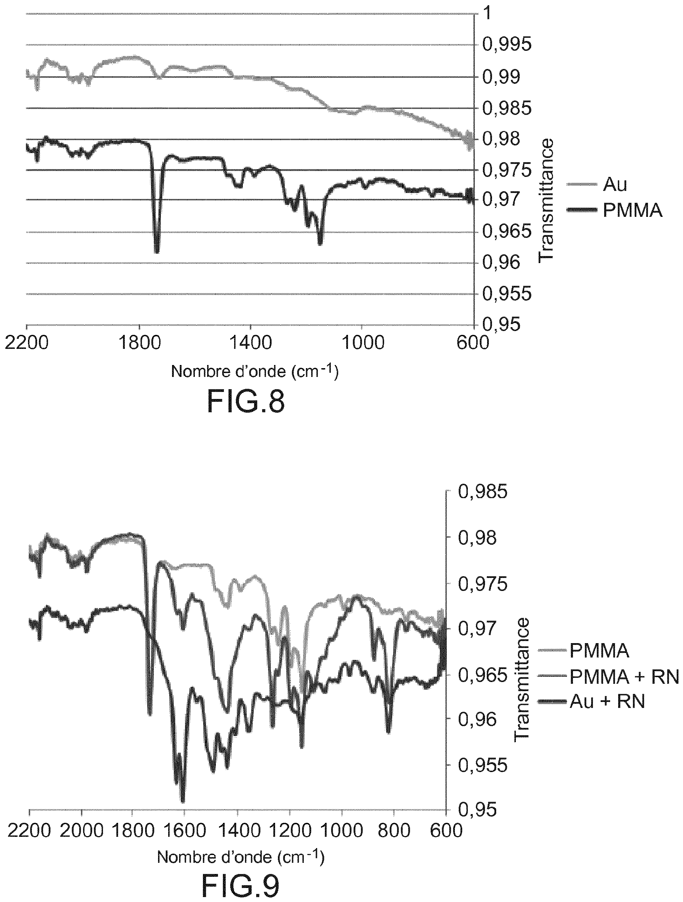

La lame est passée au spectromètre infrarouge (Figure 8). On observe à 1730 cm⁻¹ la bande caractéristique du carbonyle C=O du PMMA et des bandes dues à la liaison C-O vers 1200-1300 cm⁻¹, la lame a bien été recouverte de PMMA.

### IV.2. Greffage du rouge neutre sur lame de PMMA

Une solution contenant 0,2 g de rouge neutre et 1 équivalent de NaNO₂ (0,048 g) dans 50 mL de HCl à 0,1 mol.L⁻¹ est préparée. De la poudre de fer en excès (environ 1 g) est ajoutée à la solution avant d'y placer la lame de PMMA pendant 30 min.

La lame est passée au spectromètre infrarouge et comparée à une lame de PMMA avec la bande C=O à 1730 cm⁻¹ et une lame d'or normale greffée rouge neutre avec les bandes aromatiques vers 1600-1650 cm⁻¹. Comme, pour la lame d'or précédemment préparée, on observe à la fois la bande C=O et les bandes aromatiques : le rouge neutre a bien été greffé sur la couche de PMMA recouvrant la lame d'or.

Ceci a été aussi confirmé via le spectre XPS obtenu par différence entre le spectre d'une lame d'or recouverte de PMMA greffée rouge neutre et le spectre d'une lame d'or recouverte de PMMA sans greffage. Dans un tel spectre, il ne reste donc que le signal dû au rouge neutre et on retrouve les contributions « classiques » pour le rouge neutre, déjà observées lors du greffage du rouge neutre sur lame d'or normale.

### RÉFÉRENCES

**[1]** Noiré et al, 2000, « A New Sol-Gel Derived Optical Sensor for High Acidity Measurements : Applications in Nuclear Fuel Reprocessing », Journal of Sol-Gel Science and Technology, vol. 17, pages 131-136.
**[2]** Raoufi et al, 2013, « Fibre optic pH sensor using optimized layer-by-layer coating approach », IEEE Sensors Journal, vol. 14, pages 47-54.
**[3]** Nguyen et al, 2009, « Development of intrinsic optical fiber pH sensors for industrial applications », IEEE Sensors Conference.
**[4]** Baldini et al, 1994, « Controlled-pore glasses embedded in plastic optical fibers for gastric pH sensing purposes », Appl. Spectr., vol. 48, pages 549-552.
**[5]** Demande internationale WO 2008/078052 au nom du CEA, publiée le 3 juillet 2008.
**[6]** Lyskawa et Bélanger, 2006, « Direct Modification of a Gold Electrode with Aminophenyl Groups by Electrochemical Reduction of in Situ Generated Aminophenyl Monodiazonium Cations », Chemistry of Materials, vol. 18, pages 4755-4763.

## Revendications

1. Procédé de greffage, de façon covalente, à la surface d'un support solide, d'un indicateur coloré présentant au moins une fonction amine primaire aromatique comprenant les étapes consistant à :
a) préparer, à partir dudit indicateur coloré présentant au moins une fonction amine primaire aromatique, le sel de diazonium correspondant ;
b) mettre le support solide en contact avec une solution contenant le sel de diazonium préparé à l'étape (a) et soumettre ladite solution à des conditions non électrochimiques pendant une durée optimale de greffage moyennant quoi des chaînes organiques dont les unités sont des dérivés dudit sel de diazonium sont greffées, de façon covalente, à la surface dudit support solide ;
ladite durée optimale de greffage ayant été déterminée, préalablement à ladite étape (b), pour un indicateur coloré donné par un procédé consistant à :
α) réaliser une pluralité d'expériences, chaque expérience étant réalisée pour une période T, subdivisée régulièrement en n sous-périodes, n étant un nombre entier supérieur ou égal à 1, différent pour chaque expérience,
chaque sous-période correspondant à une étape de greffage chimique radicalaire de l'indicateur coloré à la surface d'un support solide et chaque étape de greffage étant suivie d'au moins une étape de lavage,
β) à l'issue de la période T, déterminer la quantité d'indicateur coloré greffé pour chaque expérience, normaliser la quantité déterminée pour chaque expérience par rapport à la quantité déterminée pour l'expérience où n est égal à 1 et déterminer l'expérience E pour laquelle la quantité normalisée est maximale moyennant quoi la durée optimale est T/nₑ avec nₑ correspondant à la valeur de n lors de l'expérience E;
c) laver le support solide ainsi greffé ;
d) répéter les étapes (b) et (c) ou éventuellement les étapes (a) à (c) au moins une fois.

2. Procédé selon la revendication 1, **caractérisé en ce que** ledit indicateur coloré est sensible à un élément choisi dans le groupe constitué par un ion hydrogène, un ion halogénure tel qu'un ion chlorure, un ion calcium, un ion sodium, un ion potassium ou l'oxygène.

3. Procédé selon la revendication 1 ou 2, **caractérisé en ce que** ledit indicateur coloré comprend, dans sa structure chimique native, ladite fonction amine primaire aromatique.

4. Procédé selon la revendication 3, **caractérisé en ce que** ledit indicateur coloré est un indicateur coloré sensible au pH choisi dans le groupe constitué par le Rouge Neutre, la Rhodamine 560, la Rhodamine 123, le méthyl violet 6B, le Rouge Congo et le 2-aminophénol.

5. Procédé selon la revendication 1 ou 2, **caractérisé en ce que** ladite fonction amine primaire aromatique a été introduite dans la structure chimique native de l'indicateur coloré par des techniques de substitution ou en transformant une amine secondaire ou tertiaire aromatique en une amine primaire aromatique.

6. Procédé selon l'une quelconque des revendications 1 à 5, **caractérisé en ce que** ladite étape (a) consiste à mettre ledit indicateur coloré en présence soit de NaNO₂ dans un milieu aqueux acide soit de NOBF₄ en milieu organique.

7. Procédé selon l'une quelconque des revendications 1 à 6, **caractérisé en ce que** lesdites conditions non électrochimiques sont choisies dans le groupe constitué par les conditions thermiques, les conditions cinétiques, les conditions chimiques, les conditions photochimiques et leurs combinaisons.

8. Procédé selon la revendication 1, **caractérisé en ce que** chaque étape de greffage, lors de la détermination de la durée optimale de greffage, est suivie d'une première étape de lavage dans de l'eau puis d'une seconde étape de lavage dans de l'éthanol et enfin d'une troisième et dernière étape de lavage dans l'acétone, ces trois étapes de lavage étant réalisées en présence d'ultrasons.

## Patentansprüche

1. Verfahren zum kovalenten Pfropfen eines Farbindikators mit mindestens einer aromatischen primären Aminofunktion auf die Oberfläche eines festen Trägers, umfassend die folgenden Schritte:
a) Herstellen des entsprechenden Diazoniumsalzes aus dem Farbindikator mit mindestens einer aromatischen primären Aminofunktion;
b) Inkontaktbringen des festen Trägers mit einer Lösung, die das in Schritt (a) hergestellte Diazoniumsalz enthält, und Aussetzen der Lösung nicht-elektrochemischen Bedingungen für eine optimale Pfropfzeit, wodurch organische Ketten, deren Einheiten Derivate des Diazoniumsalzes sind, kovalent auf die Oberfläche des festen Trägers gepfropft werden;
wobei die optimale Pfropfdauer vor dem Schritt (b) für einen gegebenen Farbindikator bestimmt wurde, und zwar gemäß einem Verfahren, das darin besteht:
α) eine Vielzahl von Experimenten durchzuführen, wobei jedes Experiment über einen Zeitraum T durchgeführt wird, der gleichmäßig in n Unterzeiträume unterteilt ist, wobei n eine ganze Zahl größer oder gleich 1 ist und für jedes Experiment unterschiedlich ist,
wobei jeder Unterzeitraum einem Schritt des radikalischen chemischen Pfropfens des Farbindikators auf die Oberfläche eines festen Trägers entspricht und jedem Schritt des Pfropfens mindestens ein Schritt des Waschens folgt,
β) am Ende des Zeitraums T die Menge des aufgepfropften Farbindikators für jedes Experiment zu bestimmen, die für jedes Experiment bestimmte Menge bezüglich der für das Experiment bestimmten Menge zu standardisieren, wobei n gleich 1 ist, und das Experiment E zu bestimmen, für das die standardisierte Menge maximal ist, wodurch die optimale Dauer T/nₑ ist, wobei nₑ dem Wert von n bei dem Experiment E entspricht;
c) Waschen des so gepfropften festen Trägers;
d) Wiederholen der Schritte (b) und (c) oder gegebenenfalls der Schritte (a) bis (c) mindestens einmal.

2. Verfahren nach Anspruch 1, **dadurch gekennzeichnet, dass** der Farbindikator gegenüber einem Element empfindlich ist, das aus der Gruppe ausgewählt ist, die aus einem Wasserstoffion, einem Halogenidion, wie ein Chloridion, einem Calciumion, einem Natriumion, einem Kaliumion oder Sauerstoff besteht.

3. Verfahren nach Anspruch 1 oder 2, **dadurch gekennzeichnet, dass** der Farbindikator in seiner nativen chemischen Struktur die aromatische primäre Aminofunktion enthält.

4. Verfahren nach Anspruch 3, **dadurch gekennzeichnet, dass** der Farbindikator ein pH-empfindlicher Farbindikator ist, der ausgewählt ist aus der Gruppe bestehend aus Neutralrot, Rhodamin 560, Rhodamin 123, Methylviolett 6B, Kongorot und 2-Aminophenol.

5. Verfahren nach Anspruch 1 oder 2, **dadurch gekennzeichnet, dass** die aromatische primäre Aminofunktion in die native chemische Struktur des Farbindikators durch Substitutionstechniken oder durch Umwandlung eines aromatischen sekundären oder tertiären Amins in ein aromatisches primäres Amin eingeführt wurde.

6. Verfahren nach einem der Ansprüche 1 bis 5, **dadurch gekennzeichnet, dass** Schritt (a) darin besteht, den Farbindikator entweder mit NaNO₂ in einem sauren wässrigen Medium oder mit NOBF₄ in einem organischen Medium zusammenzubringen.

7. Verfahren nach einem der Ansprüche 1 bis 6, **dadurch gekennzeichnet, dass** die nicht-elektrochemischen Bedingungen ausgewählt sind aus der Gruppe bestehend aus thermischen Bedingungen, kinetischen Bedingungen, chemischen Bedingungen, photochemischen Bedingungen und deren Kombinationen.

8. Verfahren nach Anspruch 1, **dadurch gekennzeichnet, dass** bei dem Bestimmen der optimalen Pfropfdauer auf jeden Schritt des Pfropfens ein erster Schritt des Waschens in Wasser, dann ein zweiter Schritt des Waschens in Ethanol und schließlich ein dritter und letzter Schritt des Waschens in Aceton folgen, wobei diese drei Schritte des Waschens in Gegenwart von Ultraschall durchgeführt werden.

## Claims

1. Method for grafting, in a covalent manner, onto the surface of a solid substrate, a coloured indicator having at least one aromatic primary amine function, comprising the following steps:
a) preparing, from said coloured indicator having at least one aromatic primary amine function, the corresponding diazonium salt;
b) placing the solid substrate in contact with a solution containing the diazonium salt prepared in step (a) and subjecting said solution to non-electrochemical conditions for an optimal grafting time whereby organic chains in which the units are derivatives of said diazonium salt are grafted, in a covalent manner, onto the surface of said solid substrate
said optimal grafting time having been determined, before said step (b), for a given coloured indicator by a method involving:
α) carrying out a plurality of experiments, each experiment being carried out for a period of time T, regularly subdivided into n sub-periods, n being a whole number greater than or equal to 1 that is different for each experiment,
each sub-period corresponding to a step of free-radical chemical grafting of the coloured indicator onto the surface of a solid substrate and each grafting step being followed by at least one washing step,
β) after the period of time T, determining the quantity of coloured indicator grafted for each experiment, normalising the quantity determined for each experiment with respect to the quantity determined for the experiment in which n is equal to 1, and determining the experiment E for which the normalised quantity is maximum whereby the optimal period of time is T/nₑ with nₑ corresponding to the value of n during the experiment E;
c) washing the solid substrate thus grafted;
d) repeating steps (b) and (c) or possibly steps (a) to (c) at least once.

2. Method according to claim 1, **characterised in that** said coloured indicator is sensitive to an element chosen from the group consisting of a hydrogen ion, a halide ion such as a chloride ion, a calcium ion, a sodium ion, a potassium ion or oxygen.

3. Method according to claim 1 or 2, **characterised in that** said coloured indicator comprises, in its native chemical structure, said aromatic primary amine function.

4. Method according to any one of claims 1 to 3, **characterised in that** said coloured indicator is a coloured indicator sensitive to pH chosen from the group consisting of Neutral Red, Rhodamine 560, Rhodamine 123, methyl violet 6B, Congo Red and 2-aminophenol.

5. Method according to claim 1 or 2, **characterised in that** said aromatic primary amine function has been introduced into the native chemical structure of the coloured indicator by substitution techniques or by transforming an aromatic, secondary or tertiary, amine function in an aromatic primary amine function

6. Method according to any one of claims 1 to 5, **characterised in that** said step (a) involves placing said coloured indicator in the presence of either NaNO₂ in an acidic aqueous medium or NOBF₄ in an organic medium.

7. Method according to any one of claims 1 to 6, **characterised in that** said non-electrochemical conditions are chosen from the group consisting of the thermal conditions, the kinetic conditions, the chemical conditions, the photochemical conditions and the combinations thereof.

8. Method according to claim 1, **characterised in that** each grafting step is followed by a first step of washing in water, then a second step of washing in ethanol, and finally a third, last step of washing in acetone, these three washing steps being carried out in the presence of ultrasounds.
